# EUROPEAN PATENT APPLICATION

(11) **EP 1 728 620 A2**
(43) Date of publication of application: **06.12.2006**
(21) Application number: 06010985.7
(22) Date of filing: 29.05.2006
(51) Int. Cl.: B29D 23/00

(54) **Arrangement for manufacturing a mult-pipe element**

(30) Priority: 30.05.2005 DK 200500782
(71) Applicant: Gramm Mogensen Holding A/S, 8722 Hedensted (DK)
(72) Inventor: Mogensen, Uffe Gram, 7120 Vejle Øst (DK)
(74) Representative: Tellefsen, Jens J.

(57) **Abstract**

Arrangement for manufacturing a multi-pipe element comprising a number of stations, wherein:
- on a first station (1), one or more inner pipe storages (2,3) are arranged;
- on an optional second station (9), a first inner guide member (8) comprising a number of apertures at least corresponding to the number of inner pipes is provided;
- on an optional third station (11), a second inner pipe guide mechanism (10) is provided, which guide mechanism is provided with a number of apertures at least corresponding to the number of inner pipes, and that the second guide mechanism has means for being rotated back and forth in a plane substantially perpendicular to the apertures provided for the inner pipes;
- a further station comprises (16) means for separating the one or more inner pipes from an outer pipe to be extruded around the inner pipe(s) is provided;
- an extruder head (29) connected to a supply of raw material is provided for extruding an outer pipe around the one or more inner pipes;
- on a seventh station, a cooling zone is provided;
- on an eight station (32), a storage facility is provided for storing the multi-pipe element.

## Description

### Field of the Invention

The present invention relates to an arrangement for manufacturing a multi-pipe element as well as a multi-pipe element manufactured by the method.

### Background of the Invention

In order to install and establish broad band networks, cable television and extended telephone services, it is necessary to arrange the carrier media, for example cables, fibre optics and the like, in pipes which are arranged in excavations over very large distances. By creating a network of pipes, it is possible to provide these services into the homes of users. Therefore, instead of placing a number of pipes in the excavations, it has become customary to create so-called multi-pipes where inside an outer pipe a number of inner pipes are provided in which inner pipes the cables or fibre optics needed to provide the services may be placed afterwards.

Producing multi-pipes, however, often causes certain problems. In order to minimise the cost of installing the networks, it is desirable to be able to use multi-pipes having a substantial length such that connection wells connecting two pieces of multi-pipe and the cables or fibre optics placed inside the pipes may be kept at minimum.

Due to transportation limitations as well as production limitations, multi-pipes are usually made in lengths of from approximately 800 m to 2000 m depending on the diameter of the multi-pipe and the number of inner pipes placed inside the outer pipe.

The inner pipes usually have an inner diameter spanning from a few mm to 10-20 mm. In order to be able to place the cable, fibre optics or other media carriers inside the inner pipes over the substantial lengths of the entire multi-pipe, i.e. the 800-2000 m, it is imperative that the resistance inside the inner pipe is as little as possible. If the inner pipes are twisted, locally deformed or in any other way not exhibiting a full cross-section over the entire length of the multi-pipe, it is extremely difficult, and in some instances impossible, to place the cable, fibre optics or other media carrier inside the inner pipe. This may of cause be tested before the pipe is covered in the excavation, but anyhow a defect may cause substantial delays, and under all circumstances increased costs.

### Object of the Invention

It is, therefore, an object of the present invention to provide a method for manufacturing a multi-pipe element which alleviates the above mentioned disadvantages and also provides other additional advantages.

### Description of the Invention

The present invention does this by providing an arrangement for manufacturing a multi-pipe element where said arrangement comprises a number of stations wherein:
- on a first station, one or more inner pipe storages are arranged;
- on an optional second station, a first inner guide member comprising a number of apertures at least corresponding to the number of inner pipes is provided;
- on an optional third station, a second inner pipe guide mechanism is provided, which guide mechanism is provided with a number of apertures at least corresponding to the number of inner pipes, and that the second guide mechanism has means for being rotated back and forth in a plane substantially perpendicular to the apertures provided for the inner pipes;
- a further station comprises means for separating the one or more inner pipes from an outer pipe to be extruded around the inner pipe(s) is provided;
- an extruder head connected to a supply of raw material is provided for extruding an outer pipe around the one or more inner pipes;
- on a seventh station, a cooling zone is provided;
- on an eight station, a storage facility is provided for storing the multi-pipe element.

This arrangement is able to manufacture substantially endless lengths of multi-pipe elements, but due to transportation, storage and other restrictions, the typical lengths will vary between 800 and 2000 m.

The arrangement comprises at storage facility at the first station where the inner pipes are stored such that they may be introduced in the further stations in the arrangement.

The second station is an optional station, which may be introduced in order to guide the inner pipes so as to avoid that the inner pipes intertwine, get twisted or otherwise reach an undesirable position. Being optional, it is implied that it is not necessary for all types of multi-pipe to have this station in that the inner pipes may have such a built-in rigidity that they will not have a tendency to twist or bend, or that only very few inner pipes are used such that it is fairly simple to keep them separated. Also, the distance from the source facility, namely the first station, to the third station may be such that it is possible to converge the inner pipes sufficiently before introduction into the third station, rendering the second station not necessary.

The third station, however, comprises a second inner pipe guide mechanism such that it is assured that the inner pipes are aligned before introduction into the further stages of the procedure. Although this station provides some advantages, namely that by twisting the pipes before substantially fixing them inside the outer pipe, this feature is not essential to the proper workings of the invention, and the station is therefore an optional station. The third station, furthermore, comprises the optional feature that the guide mechanism may be rotated back and fourth in a plane substantially perpendicular to the apertures provided for the inner pipes. This feature is called *SZ twisting,* and is used in the cable manufacturing industry where a number of separate leads are present in the same cable. As the cable is wound on a reel, leads along the outer periphery of the cable on the reel in relation to leads on the inner periphery will be stretched more, which may give rise to twisting of the leads in the cable. Within the scope of the present invention, the invention has realised that a corresponding phenomenon may arise when the finished multi-pipe is wound on a reel which may be the storage facility provided in the eighth station as described below. For multi-pipe elements which are not wound on a reel, this effect will not occur, and therefore it will not be necessary to provide the SZ *twisting,* and consequently this feature has been left as an optional feature depending on the form of storage provided in the eight station.

In the eight station, a storage facility is provided for storing the newly manufactured multi-pipe elements. Any type of storage is suitable which may be long cable trays in which separate lengths of multi-pipe are stored such that they are stored substantially parallel with the manufacturing process and not exposed to any bending or twisting, or they may be stored as will be mentioned below on reels, where the reels have a certain minimum diameter in order not to create sharp bends in the so manufactured multi-pipe element.

In an advantageous embodiment of the invention the means for separating the one or more inner pipes from an outer pipe to be extruded around the inner pipe(s) comprises:
- a fourth station, in which a foil supply and a foil guide are arranged where said foil guide comprises means for arranging said foil about the one or more inner pipes;
- a fifth station, wherein a nozzle is provided such that said nozzle has access to the inner pipes through the foil, where said nozzle is connected to a supply of pressurized liquid;
- and a sixth station, in which means are provided for guiding the foil wrapped inner pipes through an extrusion head, where an outer pipe is extruded around the inner pipes.

Following the third station is the fourth station wherein a foil supply and a foil guide will wrap the foil around the inner pipes. The foil guide may comprise two coaxially arranged tubes in the centre of which the inner pipes are guided, and the plastic foil is guided in the space between the two coaxially arranged tubes in that prior to introducing the foil into the space between the two tubes, the foil has passed a foil wrapping shoe whereby the foil has been given its intended shape such that as the inner pipes leave the double tube arrangement, the foil is wrapped around the inner tubes with a certain overlay. The overlay should be facing upwards because in the fifth station a nozzle is provided which nozzle will be introduced inside the foil by having access through the overlap of the foil to the inner part of the foil where the inner pipes are present. The nozzle will distribute a liquid inside the foil around the inner pipes. Although any type of liquid not being ignitable at the temperatures at which the present manufacturing process is carried out are usable, it has been found that for economic reasons, as mentioned below, water is a preferred liquid.

From the fifth station where the liquid is introduced inside the foil, the foil wrapped inner tubes are progressed to the sixth station which comprises an extrusion head such that an outer pipe is extruded about the inner pipes and the foil. Due to the extrusion process, the temperature is elevated in this section, and therefore, before the manufactured multi-pipe element is transferred to storage, a cooling section is provided at the seventh station such that the materials of the multi-pipe may reach normal levels again.

An important feature in the manufacturing process mentioned above, and thereby in the arrangement cited above, is the provision of foil wrapped around the inner tubes and the introduction of liquid, in particular water, inside the foil. This feature provides cooling around the inner tubes as the outer tube is extruded around the inner tubes. In this manner it is assured that the inner tubes are maintained free and separate from the inner wall of the outer tube which could otherwise cause obstructions when the cables, fibre optics or the like are inserted inside the inner tubes. During extrusion at the temperatures mentioned below, the liquid will very shortly be exposed to relatively high temperatures. In embodiments where water is used as the liquid, the temperature will rise above the boiling point of water such that the water shortly will be in the shape of steam, but due to the cooling zone, the steam will condensate very quickly, and return to liquid form.

In a further advantageous embodiment of the invention, a tape wrapping station is introduced between the fifth and sixth stations whereby a tape is wrapped around the foil surrounding the one or more inner pipes in order to create an assembled bundle. The extra wrapping of the foil around the inner tubes is carried out in order to create a relative well assembled bundle such that the inner tubes leaving the guide means are maintained in this optimum position inside the foil as they go through the extrusion state.

In a further advantageous embodiment, a further step is provided after the wrapping station and before the sixth station wherein means are provided for dusting the outside of the foil, and when the foil is wrapped also the tape, with a powder, in particular talcum powder. By additionally dusting the outside of the foil with for example talcum powder, it is further assured that as the assembled bundle goes through the extrusion station, the tendency of the extruded outer pipe to cling to the bundle of inner tubes wrapped in the foil and dusted with talcum powder is lowered such that a double safety feature, namely the powdering and the water inside foil, is provided in order to maintain the inner tubes free of any attachment with the outer tube.

In a still further advantageous embodiment of the invention the means for separating the one or more inner pipes from an outer pipe to be extruded around the inner pipe(s) comprises:
- a tube having an outer diameter slightly less than the inner diameter of the outer pipe to be extruded;
- a calibrator downstream from the extruder head, for determining the outside diameter of the outer pipe;
- air inlet means arranged between said extruder head and said calibrator for injecting air in the space between the outside of the tube and the inside of the outer pipe;
- a water injection pipe arranged substantially central inside the steel tube, having a first end connected to a source of water, and the opposite open end adjacent the end of the tube.

This embodiment provides for the same advantages as the first embodiment mentioned above, but without the use of foil, water and optionally talcum. The injected air will serve two purposes: firstly it will act as a seal between the outer pipe and the tube, such that the water injected between the inner pipes does not enter in the space between the tube and the outer pipe. Secondly the air will act as a cushion between the extruded outer pipe and the tube, whereby the extruded pipe will not stick, and a continuous extrusion may be maintained.

The water which is injected, typically 250 1/hour will return through the tube, due to the fact that the finished multi-pipe element is stored at an elevated position, such that gravity will force the water back. The air seal hinders that water enters the space between the tube and the outer pipe, and thereby could come into contact with the extruder head, which could cause problems, due to steam build-up in the limited space.

Due to the choice of dimensions, both of the openings in the inner tubes and the outer diameter of the outer tube, is has advantageously been found that the between 1 and 24, preferably 4 to 16, and more preferred 6 to 12 inner pipes are arranged in the first station. Depending on the number of inner tubes used and their relative sizes, the guide members as well as the extrusion head must be adapted correspondingly. Where the storage facility is a long, relatively straight, storage system, the multi-pipe element may without problems contain a very large number of inner pipes. However, for multi-pipe elements wound on reels, the size of the outer pipe may present some limitation on the useful number inner pipes which may be stored.

In a further advantageous embodiment, the outer diameter of the outer pipe is 20 to 80 mm, more preferred 25 to 65 mm, and most preferred 30 to 50 mm.

In a further advantageous embodiment, the liquid issued by the nozzle is water, and when the outer pipe has a diameter of 50 mm, approximately 751/1200 m pipe is used, and when the diameter of the outer pipe is 40 mm, approximately 50 - 75 1/1200 m pipe is used, and when the diameter of the outer pipe is 32 mm, approximately 50 1/1200 m pipe is used. The water use stated provides a safe margin such that it is assured that during the extrusion process, the outer pipe will not engage the inner pipes due to the provision of the water. When the pipe has been manufactured to the desired length, for example 1200 m which is a suitable length for the large reels which may be transported on land, the length of pipe is emptied from water, for example by blowing air through the multi-pipe element. For this purpose, a special adapter has been developed which may be fitted around the end of the pipe such that it is assured that all water is removed.

In a still further advantageous embodiment, the extruder head is of the cross head type, and the outer pipe is extruded at approximately 8 to 10 m/min, and the temperature in the extruder head is maintained at 160-220° C, more preferred 170-200° C. At this speed and in the temperature, range necessary in order to provide a smooth-flowing extrusion process of the outer pipe, the multi-pipe element will be exposed to its maximum temperature in the extrusion head for only one or a few seconds such that the development of steam is very limited.

Although the storage of both the inner pipes before being assembled in the multi-pipe element and the multi-pipe element itself may be performed in any number of ways, a particularly advantageous embodiment takes place when the multi-pipe element is stored on a large reel or in long trays. In this manner, it is fairly simple to replace empty reels of inner pipes, add additional inner pipe elements for the creation of multi-pipe elements, and remove the finished multi-pipe element.

In the same procedure as emptying the multi-pipe element from water, the multi-pipe element may advantageously also be pressure tested which is usually carried out at around a 10 bar overpressure. Furthermore, it has been tested and verified that the inner pipes are sufficiently opened such that cables, fibre optics and the like may be inserted. This is done by a so-called Q-test, where a steel ball of a certain diameter is introduced into the inner space of the inner pipes and allowed to roll through the entire multi-pipe arrangement. In this manner, it is very easy to detect if any of the inner pipes should have a section with a diminished cross-section where the ball for that particular pipe cannot pass through the inner pipe. In these cases it is possible to either repair by pulling an extension member through that particular inner pipe, or the entire multi-pipe element may be disregarded.

Furthermore, in order to improve the placement of wires, cables, fibre optics or the like inside the inner tubes, the inside of the inner tube may be lubricated with lubrication substances such as for example silicone, Teflon® or any other suitable substance. This process may be carried out in a more or less similar fashion as the process used in order to place the cables, fibre optics or the like inside the inner tubes. One preferred method is to push the cable or fibre optic through the inner tube by means of a blower. In the same manner, an amount of the lubrication substance may be introduced into the interior of the inner pipe, whereafter a distributor for example in the shape of a rubber/foam member may be blown through the pipe whereby the interior of the inner pipe is lubricated.

### Description of the Drawing

Having explained the invention, a detailed embodiment will now be described with reference to the accompanying drawing, wherein
Fig. 1 illustrates a schematic arrangement according to the invention,
Fig. 2 illustrates the nozzle injecting liquid inside the foil, and
Fig. 3 illustrates the SZ *twisting* arrangement.
Fig. 4 illustrates a second embodiment of the invention,
Fig. 5 and 6 are cross sections of fig 4.

### Detailed Description of the Invention

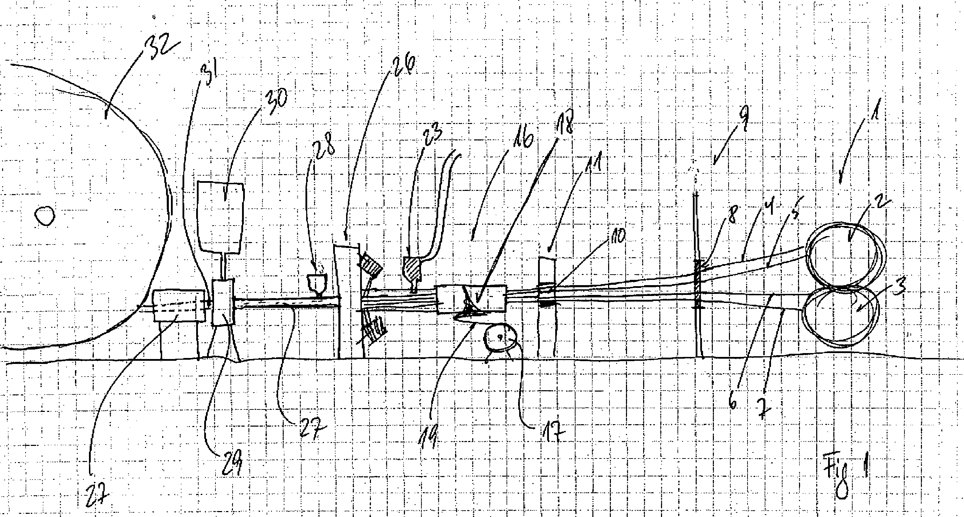

In fig. 1, a schematic representation of the arrangement according to the invention is illustrated. The first station 1 comprises one or more reels 2,3 on which reels 2,3 the inner pipes are stored.

In this example, four inner pipes 4,5,6,7 are used. The number of inner pipes may vary according to the purpose as it is very easy to arrange further reels at the storage station 1. The inner pipes 4-7 are guided through a first inner pipe guide member 8 arranged in the second station 9.

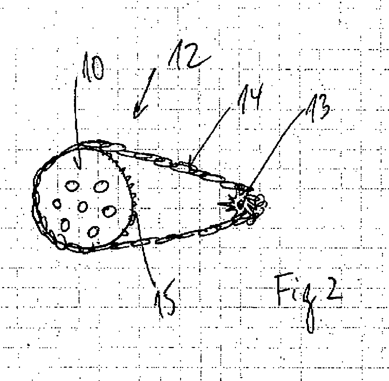

From this second station 9, the inner pipes are guided through a second inner pipe guide mechanism 10 in the third station 11. The second inner pipe guide mechanism 10 in the third station 11 may be provided with a mechanism such that an SZ *twisting* can be accomplished. With reference to fig. 2, one illustrative embodiment of such a mechanism is illustrated. The mechanism 12 comprises a gear wheel 13 connected by chain means 14 to the second inner pipe guide mechanism 10 which in this particular embodiment has been equipped with teeth 15 such that the teeth may engage the chain 14, and thereby be driven by the chain 14, which again is driven by the gear wheel 13. By attaching the gear wheel 13 to an oscillating motor, it will be possible to make the second inner pipe guide mechanism 10 continuously reverse direction as the gear wheel 13 is reversed. Other means for achieving the *SZ twisting* may be utilised without deviating from the scope of the present invention, such as for example a spindle engaging with the outside periphery of the guide wheel 10.

Turning back to fig. 1, the inner pipes are led from the third station to the fourth station. The fourth station 16 comprises a supply of plastic foil 17. The width of the foil is adapted such that it will be possible to wrap the inner pipes with a certain overlay.

The plastic foil is led to a foil guide 18 which guides the foil around the inner pipes. The inner pipes are led through a double-walled tube such that the inner pipes are led through the central part of the tube, and the foil is led through the space between the two concentrically arranged pipes 20,21. Through the overlap 22 of two sides of the plastic foil 19, a nozzle 23 is inserted. The nozzle 23 is connected to a source of pressurized liquid (not illustrated) which liquid may preferably be water. The water 24 will be issued from the nozzle 23 in order to coat the inner pipes 4,5,6,7 and leave a limited volume of water 25 in the bottom of the foil 19.

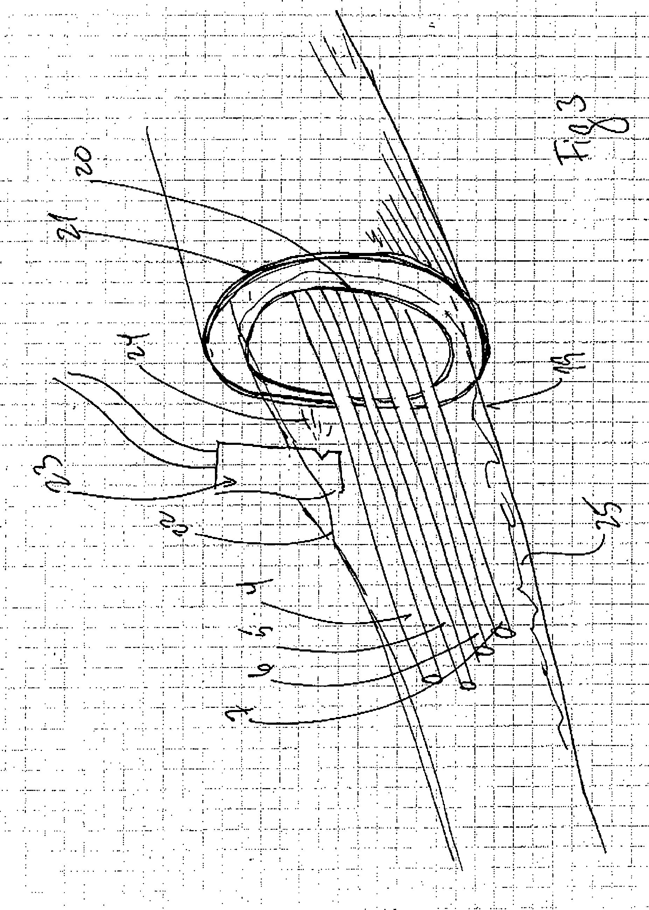

In fig. 3, the inner pipes 4,5,6,7 have been cut off for illustrative purposes only.

Turning back to fig. 1, the process is continued in a tape wrapping station 26. By wrapping the foil containing the inner tubes with a tape, an assembled bundle is created such that the inner tubes will not be able to move in relation to each other inside the foil, whereby a relatively stable tube assembly has been created. After leaving the tape wrapping station 26, the bundle 27 may be dusted, for example with talcum powder. This is carried out by a dusting mechanism 28 arranged such that a light dusting of the entire surface of the bundle is achieved. Finally, the assembled bundle is introduced into an extruder 29 in the sixth station, where a supply of polymer granules 30 provides the material for the extruder 29 in order to extrude the outer pipe around the assembled bundle 27.

After leaving the extruder 29, the multi-pipe element 31 may be introduced to a cooling unit 32 in a seventh station. Alternatively, the distance between the extruder head 29 and the storage reel 32 may be such that the multi-pipe element 31 has cooled down sufficiently such that no undesired deformation of the outer or inner pipes occurs by winding the multi-pipe element 31 on the reel 32. In this embodiment, a large reel 32 has been illustrated as the preferred storage facility in station eight, but any type of suitable storage may be utilised within the scope of the present invention.

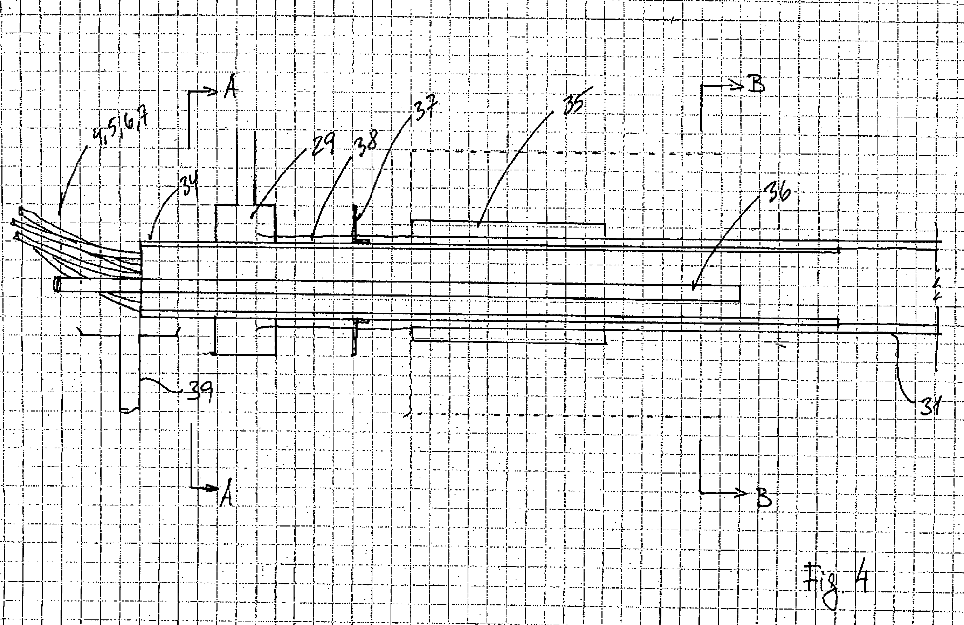

Turning to figure 4, an alternative arrangement for extruding the outer pipe around the inner pipes 4, 5, 6, and 7.

The extruder head 29 is in this embodiment arranged around a tube 34 which tube extends from outside the extruder head, pass the extruder head through a calibrator 35 and well into the finished multi pipe element 31. The inner pipes are guided into the interior of the tube 34 and also placed inside the tube is a water injection pipe 36. Furthermore, air injection means 37 are provided after the extruder head 29 and in this embodiment before the calibrator 35 such that an air cushion will be created by injecting air through the air injection means 37 between the extruded outer pipe 38 and the tube 34. The water injected through the water pipe 36 will as the multi pipe element is reeled up on the reel 32 due to the influence of gravity run back through the tube 34 and be collected by a funnel 39 provided at the free end of the tube 34. Due to the provision of the air cushion between the tube 34 and the extruded outer pipe 38, the water will not be able to enter this space. At the same time, the water will cool down the outer pipe 38 such that the inner pipes 4, 5, 6, 7 will not adhere or become stuck to the outer pipe due to the elevated temperature of the outer pipe material caused by the extrusion process.

The calibrator is a well known technical feature for extruding polymer pipes and may be of any known type.

In one embodiment of this extrusion process the tube is made from a steel material and the water injection pipe having a diameter of 4-6mm is also made from a steel material. The water consumption is approximately 250 litres per hour which is sufficient to cool the outer pipe enough such that the inner pipes will not stick to the interior side of the outer pipe 38. Furthermore, by collecting the cooling water by means of the funnel 39, and recycling this, this water may be used to preheat the raw materials for extrusion such that the energy to a large extend is reused.

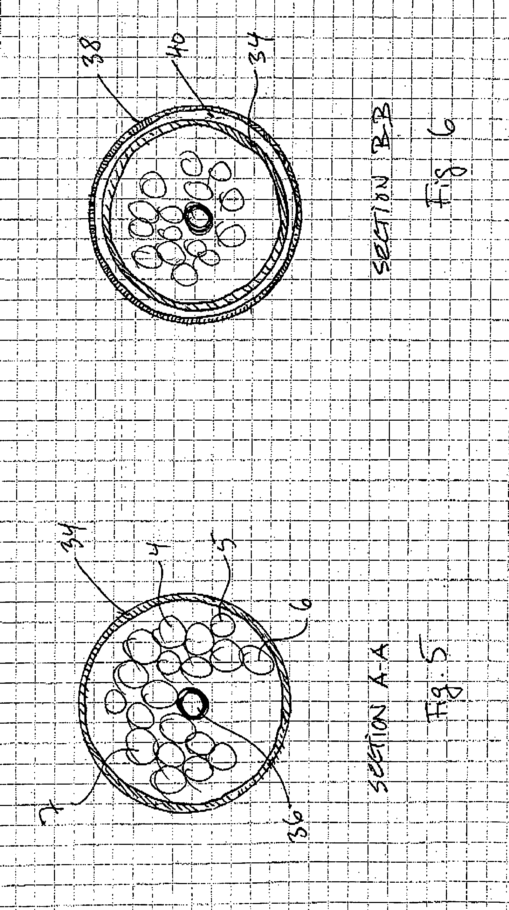

The cross sections illustrated in figures 5 and 6 are taken at the places indicated in figure 4 such that it may be seen that the tube 34 surrounds the inner pipes 4, 5, 6, 7 and that the water injection pipe 36 is arranged substantially central in the tube 34.

In figure 6 is illustrated the position in the process where the outer pipe 38 has been extruded outside the tube 34 and where an air gap 40 is present between the outer pipe 38 and tube 34. For illustrative purposes, the air gap 40 is exaggerated, in practice the air gap will be from few 10^{th} of a millimetre up to 1-2 millimetres.

Inside the tube 34 the situation is as described with reference to figure 5.

## Claims

1. Arrangement for manufacturing a multi-pipe element comprising a number of stations, wherein:
- on a first station, one or more inner pipe storages are arranged;
- on an optional second station, a first inner guide member comprising a number of apertures at least corresponding to the number of inner pipes is provided;
- on an optional third station, a second inner pipe guide mechanism is provided, which guide mechanism is provided with a number of apertures at least corresponding to the number of inner pipes, and that the second guide mechanism has means for being rotated back and forth in a plane substantially perpendicular to the apertures provided for the inner pipes;
- a further station comprises means for separating the one or more inner pipes from an outer pipe to be extruded around the inner pipe(s) is provided;
- an extruder head connected to a supply of raw material is provided for extruding an outer pipe around the one or more inner pipes;
- on a seventh station, a cooling zone is provided;
- on an eight station, a storage facility is provided for storing the multi-pipe element.

2. Arrangement according to claim 1 wherein the means for separating the one or more inner pipes from an outer pipe to be extruded around the inner pipe(s) comprises:
- a fourth station, in which a foil supply and a foil guide are arranged where said foil guide comprises means for arranging said foil about the one or more inner pipes;
- a fifth station, wherein a nozzle is provided such that said nozzle has access to the inner pipes through the foil, where said nozzle is connected to a supply of pressurized liquid;
- and a sixth station, in which means are provided for guiding the foil wrapped inner pipes through an extrusion head, where an outer pipe is extruded around the inner pipes.

3. Arrangement according to claim 2, **characterised in that** between the fifth and sixth station, a tape wrapping station is inserted, whereby a tape is wrapped around the foil surrounding the one or more inner pipes in order to create an assembled bundle.

4. Arrangement according to claim 2 or 3, **characterised in that** after the wrapping station and before the sixth station, means are provided for dusting the outside of the foil, and when the foil is wrapped also the tape, with a powder, in particular talcum powder.

5. Arrangement according to any preceding claim, **characterised in that** the liquid issued by the nozzle is water, and that when the outer pipe has a diameter of 50 mm, approximately 75 1/1200 m pipe is used, and when the diameter of the outer pipe is 40 mm, approximately 50 - 75 1/1200 m pipe is used, and when the diameter of the outer pipe is 32 mm, approximately 50 1/1200 m pipe is used.

6. Arrangement according to claim 1, wherein the means for separating the one or more inner pipes from an outer pipe to be extruded around the inner pipe(s) comprises:
- a tube having an outer diameter slightly less than the inner diameter of the outer pipe to be extruded;
- a calibrator downstream from the extruder head, for determining the outside diameter of the outer pipe;
- air inlet means arranged between said extruder head and said calibrator for injecting air in the space between the outside of the tube and the inside of the outer pipe;
- a water injection pipe arranged substantially central inside the steel tube, having a first end connected to a source of water, and the opposite open end adjacent the end of the tube;

7. Arrangement according to any preceding claim, **characterised in that** between 1 and 24, preferably 4 to 16, and more preferred 6 to 12 inner pipes are arranged in the first station.

8. Arrangement according to any preceding claim, **characterised in that** the outer diameter of the outer pipe is 20 to 80 mm, more preferred 25 to 65 mm, and most preferred 30 to 50 mm

9. Arrangement according to any preceding claim, **characterised in that** the extruder head is of the cross head type, and that the outer pipe is extruded at approximately 8 to 10 m/min, and the temperature in the extruder head is maintained at 160-220°C, more preferred 170-200°C.

10. Arrangement according to any preceding claim, **characterised in that** the multi-pipe element is stored on a large reel or in long trays.
